# EUROPÄISCHE PATENTANMELDUNG

(11) **EP 4 404 442 A1**
(43) Veröffentlichungstag der Anmeldung: **24.07.2024**
(21) Anmeldenummer: 24150537.9
(22) Anmeldetag: 05.01.2024
(51) Int. Cl.: H02K 11/40, H02K 1/32, H02K 7/00

(54) **ELEKTRISCHE MASCHINE MIT POTENTIALAUSGLEICHSVORRICHTUNG**

(30) Priorität: 17.01.2023 DE 102023200317
(71) Anmelder: VOLKSWAGEN AG, 38440 Wolfsburg (DE)
(72) Erfinder: Petrzik, Gunther, 52070 Aachen (DE)

(57) **Zusammenfassung**

Um eine elektrische Maschine bereitzustellen, mit welcher ein elektrischer Potentialausgleich zwischen dem Rotor und dem Gehäuse der elektrischen Maschine erfolgen kann, ohne dass eine Kühlung des Rotors nachteilig beeinträchtigt wird, wird eine elektrische Maschine (100) umfassend ein Gehäuse (10), einen Stator (11) und einen Rotor (12) vorgeschlagen, wobei der Rotor (12) eine Rotorhohlwelle (13) mit einem Innenraum (15) umfasst, wobei im Innenraum (15) ein drehfest mit der Rotorhohlwelle (13) angeordnetes Rohr (16) angeordnet ist, wobei die Rotorhohlwelle (13) einen Einlass (17) aufweist, durch den dem Rohr (16) ein Kühlfluid zugeführt werden kann, und wobei eine Potentialausgleichsvorrichtung (22) vorgesehen ist, wobei ferner vorgesehen ist, dass die Potentialausgleichsvorrichtung (22) einen gehäusefest und entlang einer Rotationsachse (25) der Rotorhohlwelle (13) ausgerichtet angeordneten und durch den Einlass (17) in das Rohr (16) hineinragenden Potentialausgleichsstab (23) und ein entlang der Rotationsachse (25) in dem Rohr (16) angeordnetes und elektrisch leitend mit dem Rohr (16) verbundenes Kontaktelement (24) aufweist, und dass der Potentialausgleichsstab (23) in einem elektrisch leitenden Kontakt mit dem Kontaktelement (24) steht.

## Beschreibung

Die vorliegende Erfindung betrifft eine elektrische Maschine umfassend ein Gehäuse, einen Stator und einen Rotor, wobei der Rotor eine Rotorhohlwelle mit einem Innenraum umfasst, wobei im Innenraum ein drehfest mit der Rotorhohlwelle verbundenes Rohr angeordnet ist, wobei die Rotorhohlwelle einen Einlass aufweist, durch den dem Rohr ein Kühlfluid zugeführt werden kann, und wobei eine Potentialausgleichsvorrichtung vorgesehen ist.

Im Betrieb von elektrischen Maschinen kann es zu Potentialdifferenzen zwischen dem Rotor und dem Gehäuse der elektrischen Maschine kommen. Um unerwünschte Spannungsentladungen zu vermeiden, ist es im Stand der Technik bekannt, mittels Potentialausgleichsvorrichtungen für einen elektrischen Potentialausgleich zwischen dem Rotor und dem Gehäuse zu sorgen.

Die DE 10 2020 208 518 A1 offenbart eine Anordnung für einen Elektromotor, aufweisend einen mittels einer Welle drehbar gelagerten Rotor und einen Stator, wobei die Welle als eine Hohlwelle ausgestaltet ist und radial durch mindestens ein Lager geführt ist, wobei an einem ersten axialen Endabschnitt der Welle eine Endkappe angeordnet ist, welche ein Innenvolumen der Welle axial endseitig begrenzt, wobei die Endkappe zumindest bereichsweise als ein Pumpenläufer geformt ist und Einlasskanäle zum Einleiten eines Kühlmittels in das Innenvolumen der Welle aufweist. Die Endkappe weist einen zentrierten Aufnahmeabschnitt zum Aufnehmen eines Kontaktelements auf, wobei das Kontaktelement durch ein mit dem Stator verbundenes Verbindungselement im zentrierten Aufnahmeabschnitt der Endkappe arretiert ist, oder wobei das Kontaktelement integral mit dem Verbindungselement oder integral mit der Endkappe ausgestaltet ist. Das Verbindungselement ist als eine Feder ausgestaltet und dazu eingerichtet, über das Kontaktelement eine elektrisch leitfähige Verbindung zwischen dem Rotor und dem Stator herzustellen.

Der vorliegenden Erfindung liegt die Aufgabe zugrunde, eine elektrische Maschine bereitzustellen, mit welcher ein elektrischer Potentialausgleich zwischen dem Rotor und dem Gehäuse der elektrischen Maschine erfolgen kann, ohne dass eine Kühlung des Rotors nachteilig beeinträchtigt wird.

Zur Lösung der der Erfindung zugrundeliegenden Aufgabe wird eine elektrische Maschine umfassend ein Gehäuse, einen Stator und einen Rotor vorgeschlagen, wobei der Rotor eine Rotorhohlwelle mit einem Innenraum umfasst, wobei im Innenraum ein drehfest mit der Rotorhohlwelle verbundenes Rohr angeordnet ist, wobei die Rotorhohlwelle einen Einlass aufweist, durch den dem Rohr ein Kühlfluid zugeführt werden kann, und wobei eine Potentialausgleichsvorrichtung vorgesehen ist, wobei die Potentialausgleichsvorrichtung einen gehäusefest und entlang einer Rotationsachse der Rotorhohlwelle ausgerichtet angeordneten und durch den Einlass in das Rohr hineinragenden Potentialausgleichsstab und ein entlang der Rotationsachse in dem Rohr angeordnetes und elektrisch leitend mit dem Rohr verbundenes Kontaktelement aufweist, und wobei der Potentialausgleichsstab in einem elektrisch leitenden Kontakt mit dem Kontaktelement steht.

Das Rohr kann mindestens eine Auslassöffnung aufweisen, durch die ein dem Rohr zugeführtes Kühlfluid in den Innenraum der Rotorhohlwelle geleitet werden kann. Der Stator und der Rotor sind im Inneren des Gehäuses der elektrischen Maschine angeordnet. Der Rotor weist bevorzugt ein Blechpaket auf, welches drehfest mit der Rotorhohlwelle verbunden ist. Im Rotorblechpaket können Innenkanäle für eine Rotorinnenkühlung vorgesehen sein. Die Rotorhohlwelle kann zudem, bevorzugt im Bereich ihrer axialen Enden, Auslässe aufweisen, durch die ein dem Innenraum der Rotorhohlwelle aus dem Rohr zugeführtes Kühlfluid aus der Rotorhohlwelle austreten und in die Innenkanäle des Rotorblechpaketes eintreten kann. Ein Kühlfluid kann somit durch den Einlass der Rotorhohlwelle zugeführt werden, sodass es in das in der Rotorhohlwelle drehfest angeordnete Rohr einströmt. Wenn in das Rohr durch den Einlass der Rotorhohlwelle ein Kühlfluid eingeführt wird, so wird dieses durch die Auslassöffnungen des Rohres in den Innenraum der Rotorhohlwelle geleitet und kann anschließend durch die Auslässe in die Innenkanäle des Rotorblechpaketes strömen. Bei dem Kühlfluid kann es sich insbesondere um ein Kühlöl handeln.

Erfindungsgemäß weist die elektrische Maschine eine Potentialausgleichsvorrichtung auf, welche einen gehäusefest und entlang einer Rotationsachse der Rotorhohlwelle ausgerichtet angeordneten und durch den Einlass in das Rohr hineinragenden Potentialausgleichsstab und ein entlang der Rotationsachse in dem Rohr angeordnetes und elektrisch leitend mit dem Rohr verbundenes Kontaktelement aufweist, wobei der Potentialausgleichsstab in einem elektrisch leitenden Kontakt mit dem Kontaktelement steht. Sowohl der Potentialausgleichsstab als auch das Kontaktelement verlaufen somit zumindest teilweise im Inneren des Rohres beziehungsweise der Rotorhohlwelle und sind zentral entlang der Rotationsachse angeordnet. Wird der Rotorhohlwelle somit durch den Einlass ein Kühlfluid zugeführt, so wird aufgrund der zentralen Anordnung von Kontaktelement und Potentialausgleichsstab in dem Rohr die Kühlfluidströmung nicht nachteilig beeinträchtigt.

Für den Potentialausgleich kann das Rohr direkt oder indirekt elektrisch leitend mit dem Rotor verbunden sein. Beispielsweise kann vorgesehen sein, dass das Rohr teilweise elektrisch leitend ist. So kann vorgesehen sein, dass das Rohr einen Kunststoff umfasst oder aus Kunststoff besteht, wobei in oder auf dem Rohr Leiterbahnen integriert sind. Ferner kann das Rohr zumindest teilweise mit einer elektrisch leitenden Beschichtung versehen sein. Eine zwischen dem Rotor und dem Gehäuse auftretende Potentialdifferenz kann vom Rotor über das Rohr, welches wie vorbeschrieben zumindest teilweise elektrisch leitend ist, das Kontaktelement und den Potentialausgleichsstab, welcher in einem elektrisch leitenden Kontakt mit dem Gehäuse steht, ausgeglichen werden.

Besonders bevorzugt ist vorgesehen, dass der elektrisch leitende Kontakt zwischen Potentialausgleichsstab und Kontaktelement ein Schleifkontakt ist.

Der Potentialausgleichsstab ist insbesondere drehfest mit dem Gehäuse verbunden, und das Kontaktelement ist drehfest mit dem Rohr verbunden. Das heißt, im Betrieb dreht sich das Kontaktelement mit der Rotorhohlwelle beziehungsweise dem Rohr mit, wohingegen der Potentialausgleichsstab sich nicht gegenüber dem Gehäuse dreht. Der elektrisch leitende Kontakt zwischen Potentialausgleichsstab und Kontaktelement ist daher bevorzugt als Schleifkontakt ausgebildet.

Mit weiterem Vorteil kann vorgesehen sein, dass eine Zuführdüse vorgesehen ist, mit welcher ein Kühlfluid dem Einlass der Rotorhohlwelle zugeführt werden kann, und dass der Potentialausgleichsstab axial durch die Zuführdüse geführt ist.

Der entlang der Rotationsachse des Rohres verlaufend ausgerichtete Potentialausgleichsstab kann somit aus dem Rohr hinaus axial durch die Zuführdüse geführt und im Inneren der Zuführdüse elektrisch leitend mit dem Gehäuse verbunden sein.

Die Zufuhrdüse ist dabei bevorzugt gehäusefest angeordnet und ragt weiter bevorzugt in den Einlass der Rotorhohlwelle hinein. Die Zuführdüse kann darüber hinaus auch als Strahlapparat ausgebildet sein.

Bevorzugt ist vorgesehen, dass die Zuführdüse entlang der Rotationsachse ausgerichtet ist.

Mit weiterem Vorteil kann vorgesehen sein, dass das Kontaktelement mit einer dem Einlass abgewandten Seite des Rohrs verbunden ist.

Mit anderen Worten durchläuft das Kontaktelement beziehungsweise die Kombination aus Kontaktelement und Potentialausgleichsstab bevorzugt das gesamte Rohr entlang der Rotationsachse bis zu der dem Einlass abgewandten Seite des Rohres. An der dem Einlass abgewandten Seite des Rohres ist das Kontaktelement elektrisch leitend mit dem Rohr verbunden.

Mit weiterem Vorteil kann vorgesehen sein, dass das Rohr mit einer Welle-Nabe-Verbindung drehfest mit der Rotorhohlwelle verbunden ist, wobei die Welle-Nabe-Verbindung elektrisch leitend ausgebildet ist, und dass ein elektrischer Leiter die Welle-Nabe-Verbindung mit dem Kontaktelement verbindet.

Die Welle-Nabe-Verbindung zwischen Rohr und Rotorhohlwelle erfüllt somit eine Doppelfunktion. Zum einen bewirkt die Welle-Nabe-Verbindung eine drehfeste Anordnung des Rohres in der Rotorhohlwelle. Gleichzeitig dient die Welle-Nabe-Verbindung der elektrisch leitenden Verbindung des Rotors mit dem Kontaktelement über das Rohr, beispielsweise über in oder auf dem Rohr vorgesehene Leiterbahnen oder über eine elektrisch leitende Beschichtung des Rohrs. Mit anderen Worten kann der elektrische Leiter als Leiterbahn oder als elektrisch leitende Beschichtung des Rohres ausgebildet sein.

Bevorzugt kann vorgesehen sein, dass die Welle-Nabe-Verbindung elektrisch leitend mit einem Kontaktpunkt der Rotorhohlwelle verbunden ist, und dass der Potentialausgleichsstab elektrisch leitend mit einem Kontaktpunkt des Gehäuses verbunden ist.

Die Rotorhohlwelle steht für den Potentialausgleich in einem elektrisch leitenden Kontakt mit dem Rotorblechpaket. Für diese elektrisch leitende Verbindung kann ein Kontaktpunkt an der Rotorhohlwelle vorgesehen sein. Über einen dazu vorgesehenen elektrischen Leiter ist der Kontaktpunkt der Rotorwohlwelle mit der Welle-Nabe-Verbindung verbunden. Die Welle-Nabe-Verbindung ist wiederum elektrisch leitend über das Rohr mit dem Kontaktelement verbunden. Über den elektrischen Kontakt zwischen Kontaktelement und Potentialausgleichsstab kann anschließend der Potentialausgleich des Rotors über einen Kontaktpunkt des Gehäuses erfolgen.

Mit weiterem Vorteil kann vorgesehen sein, dass, bevorzugt in der Zuführdüse, ein Federelement vorgesehen ist, welches den Potentialausgleichsstab mit einer Kontaktkraft gegen das Kontaktelement beaufschlagt.

Alternativ oder zusätzlich kann auch vorgesehen sein, dass der innerhalb der Zuführdüse im Betrieb aufgebaute Kühlfluiddruck den Potentialausgleichsstab mit einer Kontaktkraft gegen das Kontaktelement beaufschlagt.

Mit weiterem Vorteil kann vorgesehen sein, dass ein Endabschnitt an der dem Einlass zugewandten Seite des Rohres vorgesehen ist, wobei ein Auslassbereich der Zuführdüse in dem Endabschnitt, bevorzugt unter Ausbildung eines Spaltes, aufgenommen ist, wobei ein Durchmesser des Rohres größer ist als ein Durchmesser des Endabschnitts, wobei bevorzugt der Auslassbereich durch den Endabschnitt in das Rohr hineinragend angeordnet ist.

Der Endabschnitt des Rohres ist dabei bevorzugt jener Abschnitt, welcher im Bereich des Einlasses der Rotorhohlwelle angeordnet ist. Die Zuführdüse ragt durch den Endabschnitt hindurch und in das Rohr hinein. Der Endabschnitt weist einen geringeren Durchmesser als der Rest des Rohres auf. Diese Reduktion des Durchmessers dient dazu, die Gefahr einer Leckage durch den Spalt zu verringern. Hierbei kann zwischen dem Rohr und dem Endabschnitt eine Stufe oder ähnliches vorgesehen sein.

Der Spalt zwischen der Zuführdüse und dem Endabschnitt ist dabei vorteilhafterweise so gering ausgebildet, dass die Gefahr einer Leckage weiter verringert wird. Der Endabschnitt kann bei einer Rotation der Rotorhohlwelle berührungsfrei um die Zuführdüse rotieren.

Zudem kann vorgesehen sein, dass das Rohr an der dem Strahlapparat abgewandten Seite axial verschlossen ist, dass das Rohr mindestens eine Auslassöffnung aufweist, durch die ein dem Rohr zugeführtes Kühlfluid in den Innenraum der Rotorhohlwelle geleitet werden kann, wobei die mindestens eine Auslassöffnung in einer Außenwand des Rohres angeordnet ist, wobei bevorzugt die Auslassöffnung in einem Winkel gegenüber einer Radialrichtung geneigt ausgebildet ist.

Das Kühlfluid tritt somit bevorzugt nicht axial aus dem Rohr in den Innenraum der Rotorhohlwelle aus, sondern wird radial durch Auslassöffnungen in der radialen Außenwand des Rohres in den Innenraum der Rotorhohlwelle geleitet. Bei der Außenwand kann es sich insbesondere um die radiale Umfangswand des Rohres handeln. Dabei ist ferner vorgesehen, dass die Auslassöffnungen in einem Winkel gegenüber einer Radialrichtung geneigt ausgebildet sind. Hierdurch kann aus den Auslassöffnungen austretendes Kühlfluid gerichtet in den Innenraum der Rotorhohlwelle einströmen, um eine symmetrische Verteilung des Kühlfluids in dem Innenraum der Rotorhohlwelle zu begünstigen.

Die Erfindung wird nachstehend näher anhand der beigefügten Figuren erläutert. Es zeigen:
- Fig. 1: eine elektrische Maschine mit einer Potentialausgleichsvorrichtung,
- Fig. 2: eine Rotorhohlwelle mit einem Potentialausgleichsstab und einem Kontaktelement, und
- Fig. 3: eine elektrisch leitende Welle-Nabe-Verbindung zwischen einer Rotorwelle und einem darin angeordneten Rohr.

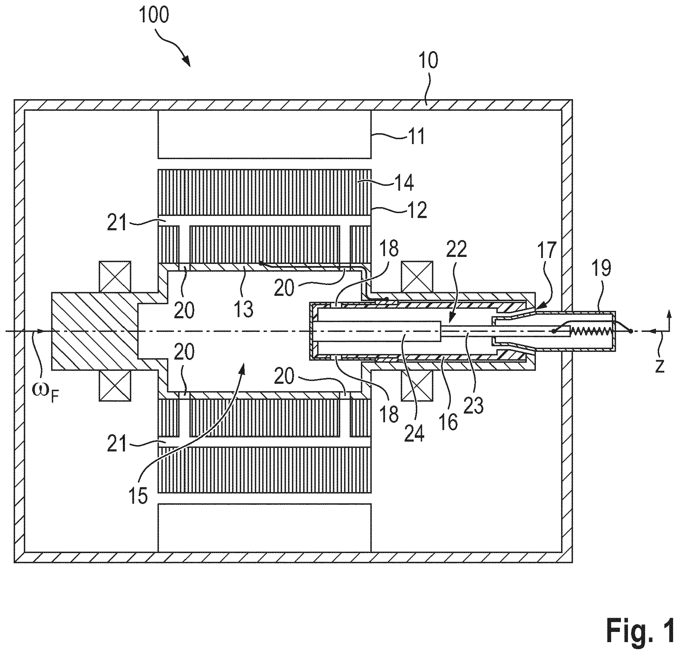

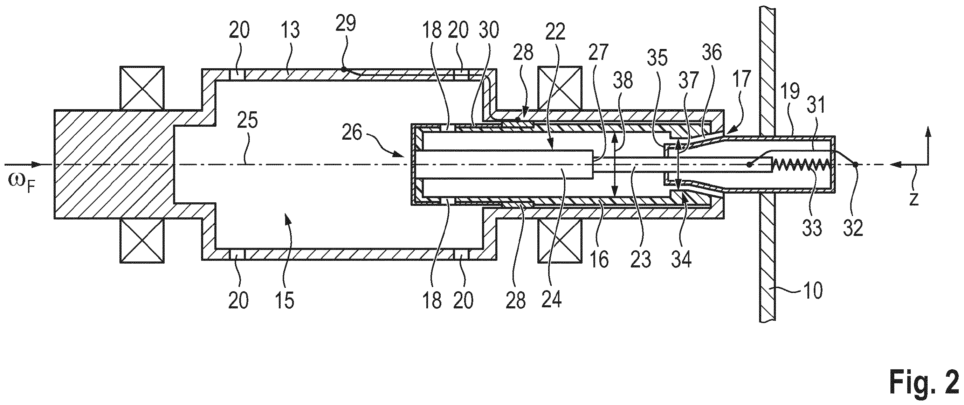

Fig. 1 zeigt in einer schematischen Schnittansicht eine elektrische Maschine 100 umfassend ein Gehäuse 10, einen Stator 11 und einen Rotor 12, wobei der Rotor 12 eine Rotorhohlwelle 13 umfasst. Die Rotorhohlwelle 13 trägt ein Rotorblechpaket 14. Die Rotorhohlwelle 13 weist einen Innenraum 15 auf, wobei im Innenraum 15 ein drehfest mit der Rotorhohlwelle 13 verbundenes Rohr 16 angeordnet ist. Die Rotorhohlwelle 13 weist einen Einlass 17 auf, durch den dem Rohr 16 ein Kühlfluid zugeführt werden kann. Das Rohr 16 weist Auslassöffnungen 18 auf, durch die ein dem Rohr 16 zugeführtes Kühlfluid in den Innenraum 15 der Rotorhohlwelle 13 geleitet werden kann. Es ist eine Zuführdüse 19 vorgesehen, mit welcher ein Kühlfluid dem Einlass 17 der Rotorhohlwelle 13 zugeführt werden kann. Die Zuführdüse 19 ist gehäusefest angeordnet. Die Rotorhohlwelle 13 weist ferner Auslässe 20 auf, durch die ein dem Innenraum 15 der Rotorhohlwelle 13 zugeführtes Kühlfluid aus der Rotorhohlwelle 13 austreten und in Innenkanäle 21 des Rotorblechpaketes 14 zur Rotorinnenkühlung eintreten kann. Die elektrische Maschine weist darüber hinaus eine Potentialausgleichsvorrichtung 22 mit einem Potentialausgleichsstab 23 und einem Kontaktelement 24 auf. Die Potentialausgleichsvorrichtung 22 wird folgend bezugnehmend auf die Fig. 2 näher erläutert.

Der Potentialausgleichsstab 23 ist gehäusefest angeordnet und entlang der Rotationsachse 25 der Rotorhohlwelle 13 ausgerichtet und ragt durch den Einlass 17 in das Rohr 16 hinein. Dabei ist der Potentialausgleichsstab 23 auch axial durch die Zuführdüse 19 geführt. Das Kontaktelement 24 ist ebenfalls entlang der Rotationsachse 25 ausgerichtet und im Inneren des Rohrs 16 angeordnet. Das Kontaktelement 24 ist an der dem Einlass 17 abgewandten Seite 26 elektrisch leitend mit dem Rohr 16 verbunden. Das Kontaktelement 24 und der Potentialausgleichsstab 23 stehen in einem elektrisch leitenden Kontakt miteinander, welcher als Schleifkontakt 27 ausgebildet ist. Das Rohr 16 ist mittels einer Welle-Nabe-Verbindung 28 mit der Rotorhohlwelle 13 verbunden. Die Welle-Nabe-Verbindung 28 ist dabei elektrisch leitend ausgebildet und elektrisch leitend mit einem Kontaktpunkt 29 der Rotorhohlwelle 13 verbunden. Das Rohr 16, welches ansonsten aus Kunststoff gefertigt sein kann, weist zumindest einen elektrisch leitenden Bereich, zum Beispiel eine elektrisch leitende Beschichtung 30 oder eine Leiterbahn, auf, welche den elektrischen Kontakt zwischen der Welle-Nabe-Verbindung 28 und dem Kontaktelement 24 herstellt. Der Potentialausgleichsstab 23 ist wiederum über einen elektrischen Leiter 31 elektrisch leitend mit einem Kontaktpunkt 32 des Gehäuses 10 verbunden. Somit kann eine Potentialdifferenz zwischen dem Kontaktpunkt 29 der Rotorhohlwelle 13 und dem Kontaktpunkt 32 des Gehäuses 10 über die Welle-Nabe-Verbindung 28, die elektrisch leitende Beschichtung 30 des Rohres 16, das Kontaktelement 24, den Potentialausgleichsstab 23 und den elektrischen Leiter 31 ausgeglichen werden.

Im Betrieb drehen sich das Rohr 16 und das Kontaktelement 24 mit der Rotorhohlwelle 13 mit, während der Potentialausgleichsstab 23 drehfest mit dem Gehäuse 10 verbunden ist. Durch die Zuführdüse 19 kann ein Kühlfluid, wie beispielsweise ein Kühlöl, durch den Einlass 17 der Rotorhohlwelle 13 in das Rohr 16 geleitet werden. Aufgrund der zentralen Anordnung von Potentialausgleichsstab 23 und Kontaktelement 24 wird die Zuführung des Kühlfluids nicht nachteilig beeinträchtigt. Zur Sicherstellung des elektrischen Schleifkontaktes 27 zwischen Potentialausgleichsstab 23 und Kontaktelement 24 ist ein Federelement 33 in der Zuführdüse 19 vorgesehen, welche den Potentialausgleichsstab 23 mit einer Kontaktkraft gegen das Kontaktelement 24 beaufschlagt.

Die ebenfalls gehäusefest angeordnete Zuführdüse 19 ragt durch den Einlass 17 der Rotorhohlwelle 13 hinein. Das Rohr 16 weist einen Endabschnitt 34 auf, in welchem der Auslassbereich 35 der Zuführdüse 19 unter Ausbildung eines Spaltes 36 aufgenommen ist. Der Spalt 36 ist dabei so schmal gewählt, dass eine Leckage von in das Rohr 16 eingeführtem Kühlfluid durch den Spalt 36 verhindert wird. Ferner weist der Endabschnitt 34 einen Durchmesser 37 auf, welcher geringer als der Durchmesser 38 des restlichen Rohrs 16 ist. Hierdurch wird ein Rückfluss von Kühlfluid durch den Spalt 36 weiter verhindert. An der dem Einlass 17 abgewandten Seite 26 des Rohres 16 ist dieses axial verschlossen. Das Rohr 16 weist radiale Auslassöffnungen 18 auf, durch die ein dem Rohr 16 von der Zuführdüse 19 zugeführtes Kühlfluid in den Innenraum 15 der Rotorhohlwelle 13 gelangen kann. Das Kühlfluid kann anschließend weiter zu den Auslässen 20 der Rotorhohlwelle 13 strömen.

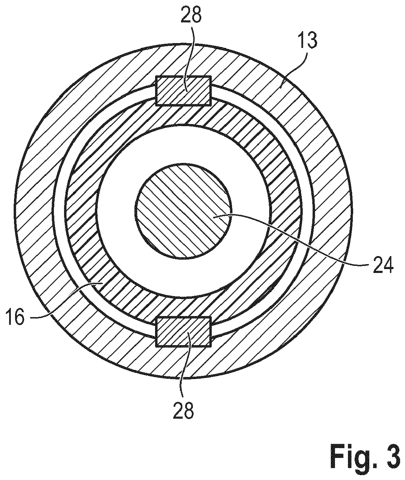

Fig. 3 zeigt eine Querschnittsansicht der Rotorhohlwelle 13. Gezeigt ist die konzentrische Anordnung von Rotorhohlwelle 13, Rohr 16 und Kontaktelement 24. Ferner ist die Welle-Nabe-Verbindung 28 gezeigt.

### Bezugszeichenliste

- 100: Elektrische Maschine
- 10: Gehäuse
- 11: Stator
- 12: Rotor
- 13: Rotorhohlwelle
- 14: Rotorblechpaket
- 15: Innenraum
- 16: Rohr
- 17: Einlass
- 18: Auslassöffnung
- 19: Zuführdüse
- 20: Auslass
- 21: Innenkanal
- 22: Potentialausgleichsvorrichtung
- 23: Potentialausgleichsstab
- 24: Kontaktelement
- 25: Rotationsachse
- 26: Abgewandte Seite
- 27: Schleifkontakt
- 28: Welle-Nabe-Verbindung
- 29: Kontaktpunkt
- 30: Elektrisch leitende Beschichtung
- 31: Elektrischer Leiter
- 32: Kontaktpunkt
- 33: Federelement
- 34: Endabschnitt
- 35: Auslassbereich
- 36: Spalt
- 37: Durchmesser
- 38: Durchmesser

## Patentansprüche

1. Elektrische Maschine (100) umfassend ein Gehäuse (10), einen Stator (11) und einen Rotor (12), wobei der Rotor (12) eine Rotorhohlwelle (13) mit einem Innenraum (15) umfasst, wobei im Innenraum (15) ein drehfest mit der Rotorhohlwelle (13) verbundenes Rohr (16) angeordnet ist, wobei die Rotorhohlwelle (13) einen Einlass (17) aufweist, durch den dem Rohr (16) ein Kühlfluid zugeführt werden kann, und wobei eine Potentialausgleichsvorrichtung (22) vorgesehen ist, **dadurch gekennzeichnet, dass** die Potentialausgleichsvorrichtung (22) einen gehäusefest und entlang einer Rotationsachse (25) der Rotorhohlwelle (13) ausgerichtet angeordneten und durch den Einlass (17) in das Rohr (16) hineinragenden Potentialausgleichsstab (23) und ein entlang der Rotationsachse (25) in dem Rohr (16) angeordnetes und elektrisch leitend mit dem Rohr (16) verbundenes Kontaktelement (24) aufweist, und dass der Potentialausgleichsstab (23) in einem elektrisch leitenden Kontakt mit dem Kontaktelement (24) steht.

2. Elektrische Maschine (100) nach Anspruch 1, **dadurch gekennzeichnet, dass** der elektrisch leitende Kontakt zwischen Potentialausgleichsstab (23) und Kontaktelement (24) ein Schleifkontakt (27) ist.

3. Elektrische Maschine (100) nach Anspruch 1 oder 2, **dadurch gekennzeichnet, dass** eine Zuführdüse (19) vorgesehen ist, mit welcher ein Kühlfluid dem Einlass (17) der Rotorhohlwelle (13) zugeführt werden kann, und dass der Potentialausgleichsstab (23) axial durch die Zuführdüse (19) geführt ist.

4. Elektrische Maschine (100) nach Anspruch 3, **dadurch gekennzeichnet, dass** die Zuführdüse (19) entlang der Rotationsachse (25) ausgerichtet ist.

5. Elektrische Maschine (100) nach einem der vorgenannten Ansprüche, **dadurch gekennzeichnet, dass** das Kontaktelement (24) mit einer dem Einlass (17) abgewandten Seite (26) des Rohrs (16) verbunden ist.

6. Elektrische Maschine (100) nach einem der vorgenannten Ansprüche, **dadurch gekennzeichnet, dass** das Rohr (16) mit einer Welle-Nabe-Verbindung (28) drehfest mit der Rotorhohlwelle (13) verbunden ist, wobei die Welle-Nabe-Verbindung (28) elektrisch leitend ausgebildet ist, und dass ein elektrischer Leiter die Welle-Nabe-Verbindung (28) mit dem Kontaktelement (24) verbindet.

7. Elektrische Maschine (100) nach Anspruch 6, **dadurch gekennzeichnet, dass** die Welle-Nabe-Verbindung (28) elektrisch leitend mit einem Kontaktpunkt (29) der Rotorhohlwelle (13) verbunden ist, und dass der Potentialausgleichsstab (23) elektrisch leitend mit einem Kontaktpunkt (32) des Gehäuses (10) verbunden ist.

8. Elektrische Maschine (100) nach einem der vorgenannten Ansprüche, **dadurch gekennzeichnet, dass**, bevorzugt in der Zuführdüse (19), ein Federelement (33) vorgesehen ist, welches den Potentialausgleichsstab (23) mit einer Kontaktkraft gegen das Kontaktelement (24) beaufschlagt.

9. Elektrische Maschine (100) nach einem der Ansprüche 3 bis 8, **dadurch gekennzeichnet, dass** ein Endabschnitt (34) an der dem Einlass (17) zugewandten Seite (26) des Rohrs (16) vorgesehen ist, wobei ein Auslassbereich (35) der Zuführdüse (19) in dem Endabschnitt (34), bevorzugt unter Ausbildung eines Spaltes (37), aufgenommen ist, wobei ein Durchmesser (38) des Rohrs (16) größer ist als ein Durchmesser (37) des Endabschnitts (34), wobei bevorzugt der Auslassbereich (35) durch den Endabschnitt (34) in das Rohr (16) hineinragend angeordnet ist.

10. Elektrische Maschine (100) nach einem der vorgenannten Ansprüche, **dadurch gekennzeichnet, dass** das Rohr (16) an der dem Einlass (17) abgewandten Seite (26) axial verschlossen ist, dass das Rohr (16) mindestens eine Auslassöffnung (18) aufweist, durch die ein dem Rohr (16) zugeführtes Kühlfluid in den Innenraum (15) der Rotorhohlwelle (13) geleitet werden kann, wobei die mindestens eine Auslassöffnung (18) in einer Außenwand des Rohrs (16) angeordnet ist, wobei bevorzugt die Auslassöffnung (18) in einem Winkel gegenüber einer Radialrichtung geneigt ausgebildet ist.
